# EUROPEAN PATENT APPLICATION

(11) **EP 3 563 668 A1**
(43) Date of publication of application: **06.11.2019**
(21) Application number: 19171025.0
(22) Date of filing: 25.04.2019
(51) Int. Cl.: A01G 3/053, B23D 49/00

(54) **HEDGE TRIMMER**

(30) Priority: 02.05.2018 JP 2018088698
(71) Applicant: Yamabiko Corporation, Ohme-shi Tokyo 198-8760 (JP)
(72) Inventor: HANADA, Kazuya, Ohme-shi, Tokyo 198-8760 (JP); TSUDA, Yukinori, Ohme-shi, Tokyo 198-8760 (JP)
(74) Representative: Wohlfahrt, Jan Günther

(57) **Abstract**

Provided is a hedge trimmer designed to have substantially no step between the reference planes on the cutter side and the crank cam side, and thus have a simplified structure of a gear case and the like, reduced components, and improved assembly property, resulting in reduced dimensional variation errors as component assembly and reduced component cost and processing and assembly cost. The hedge trimmer 1 includes a cutter drive gear 40 rotationally driven by a drive source 15 in a body housing 12, a crank cam 50 provided in the gear 40 and including an eccentric disk 51, 52 and an upper cutter 21 and a lower cutter 22 slidably facing and contacting relatively. The crank cam 50 causes the upper and lower cutters 21 and 22 to reciprocate in relatively opposite directions along the longitudinal direction thereof. The crank cam 50 including the eccentric disk 51, 52 and the upper and lower cutters 21 and 22 are arranged in the upper face side of the gear 40. The cutter 21, 22 has a frame-shaped engagement portion 26, 27 that meshes with the eccentric disk 51, 52 so that the eccentric disk 51, 52 rotates while slidably contacting the inner peripheral surface of the engagement portion 26, 27. The reference planes on the side of the cutter 21, 22 and the side of the crank cam 50 are formed so that substantially no step is generated between the upper faces of the upper cutter 21 and the eccentric disk 51, 52.

## Description

### Technical Field

The present invention relates to a hedge trimmer configured to perform pruning or cropping, for example, with their upper and lower cutters, which are long and thin, reciprocated in relatively opposite directions along the longitudinal direction thereof, so that their cutting edges in a comb-like tooth shape are ground against each other.

### Background Art

Conventionally, a hedge trimmer is well known that includes, as also seen in Patent Literature 1 and Patent Literature 2, a cutter drive gear rotationally driven by a drive source in a body housing, a crank cam provided on one face side of the gear and including upper and lower eccentric disks, and a pair of upper and lower cutters slidably facing and contacting each other, and that performs pruning or cropping, for example, by causing the crank cam to reciprocate the upper and lower cutters in mutually opposite directions along the longitudinal direction thereof, thereby grinding their cutting edges in a comb-like tooth shape against each other.

More specifically, each cutter has a thin, long substrate portion protruding to the front side of the body housing, and the cutting edges are alternately protruded on the right and left sides of the substrate portion along the longitudinal direction thereof, with predetermined gaps therebetween. In addition, the proximal end of the substrate portion is provided with a frame-shaped engagement portion in an elliptical or race-track shape having a short axis along the longitudinal direction. The respective frame-shaped engagement portions mesh with the upper and lower eccentric disks of the crank cam so that the upper and lower eccentric disks are rotated while slidably contacting the inner peripheral surfaces of the respective frame-shaped engagement portions.

In addition, a belt-like cutter support is provided on at least one of the cutters located on the upper side as seen in side view so as to support and guide the upper and lower cutters while allowing mutual reciprocation thereof. The cutter support is fastened to the upper and lower cutters with bolts and the like.

### Citation List

### Patent Literature

Patent Literature 1: JP H03-10828 U
Patent Literature 2: JP 4468055 B

### Summary of Invention

### Technical Problem

By the way, in the aforementioned conventional hedge trimmer, the crank cam and the cutters are arranged on the lower face side of the gear, and the reference plane on the cutter side and the reference plane on the crank cam side, for allowing the proximal ends (i.e., the frame-shaped engagement portions) of the upper and lower cutters to mesh with the upper and lower eccentric disks, respectively, of the crank cam, differ in their positions along the thickness direction of the cutter.

That is, in the hedge trimmer described in each of Patent Literature 1 and Patent Literature 2, the reference plane on the cutter side is a plane where the cutter support on the upper side abuts a gear case, while the reference plane on the crank cam side is a plane where the gear case abuts the upper face of a gear thrust receiving member arranged on the gear.

When there is a large step between the reference plane on the cutter side and the reference plane on the crank cam side as seen in Patent Literature 1 and Patent Literature 2, the structure of the gear case and the like becomes complex, and the number of components is increased, and further, the assembly property would degrade, which can result in large dimensional variation errors as component assembly. Therefore, in order to allow the frame-shaped engagement portions of the upper and lower cutters to appropriately mesh with the upper and lower eccentric disks, respectively, of the crank cam, strict dimensional management is required, which can increase the component cost as well the processing and assembly cost.

The present invention has been made in view of the foregoing, and provides a hedge trimmer that is designed to have substantially no step between the reference plane on the cutter side and the reference plane on the crank cam side, and thus have a simplified structure of the gear case and the like as well as a reduced number of components and an improved assembly property, so that dimensional variation errors as component assembly can be reduced and the component cost as well as the processing and assembly cost can be suppressed.

### Solution to Problem

Accordingly, the hedge trimmer in accordance with the present invention basically includes a cutter drive gear rotationally driven by a drive source in a body housing, a crank cam provided in the gear and including an eccentric disk, and a pair of upper cutter and lower cutter slidably facing and contacting relatively, in which the crank cam causes the upper and lower cutters to reciprocate in relatively opposite directions along the longitudinal direction of the cutters, the crank cam including the eccentric disk and the upper and lower cutters are arranged in the upper face side of the gear, the cutter has an engagement portion that meshes with the eccentric disk so that the eccentric disk is rotated while slidably contacting the inner peripheral surface of the engagement portion, and the reference plane on the cutter side and the reference plane on the crank cam side are formed so that substantially no step is generated between the upper face of the cutter and the upper face of the eccentric disk.

In some embodiments, the hedge trimmer further includes a belt-like cutter support that is operable relative to the cutter so as to support and guide the cutter while allowing relative reciprocation of the cutters, in which the cutter support has, on its proximal end side, an extending portion placed on the engagement portion of the cutter engaging the crank cam, and the extending portion forms the reference plane on the cutter side and the reference plane on the crank cam side.

In some embodiments, one of the upper and lower cutters is immovably fixed with respect to the reference planes.

In some embodiments, one of the upper and lower cutters and the cutter support are integrally formed.

In some embodiments, the crank cam and the cutter drive gear are integrally formed, and the plate thickness of the eccentric disk of the crank cam and the plate thickness of the engagement portion of the cutter are approximately equal.

In some embodiments, each of the upper and lower cutters includes a thin, long substrate portion protruding to the front side of the body housing, the substrate portion has cutting edges provided in a protruding manner along the longitudinal direction of the substrate portion, with predetermined gaps therebetween, and the proximal end of the substrate portion is provided with the engagement portion that meshes with the eccentric disk of the crank cam so that the eccentric disk is rotated while slidably contacting the inner peripheral surface of the engagement portion.

In some embodiments, the hedge trimmer further includes a pressing member that presses one of a right end side or a left end side of the engagement portion of the cutter against a gear case in which the gear is arranged, so as to prevent the cutter from disengaging from the crank cam due to the crank cam having been offset from the gear to an upper side in the thickness direction of the cutter.

### Advantageous Effects of Invention

According to the hedge trimmer in accordance with the present invention, no step is generated between the reference plane on the cutter side and the reference plane on the crank cam side. Therefore, dimensional management becomes easy, the number of components can be reduced, and the assembly property and the like can be improved, so that the structure of the gear case and the like can be simplified.

In some embodiments, the cutter support has an extending portion so that no step is generated between the reference plane on the cutter side and the reference plane on the crank cam side, and the extending portion of the cutter support can also be used to receive thrusts of the gear and the crank cam. Therefore, it is possible to allow the engagement portion of the cutter to appropriately mesh with the eccentric disk of the crank cam, simplify the structure of the gear case and the like, reduce the number of components, and improve the assembly property and the like. Thus, dimensional management becomes easy and the component cost, the processing and assembly cost, and the like can be reduced.

In some embodiments, even in a hedge trimmer of a type where one of the upper and lower cutters does not move, no step is generated between the reference plane on the cutter side and the reference plane on the crank cam side. Therefore, dimensional management becomes easy, the number of components can be reduced, and the assembly property and the like can be improved, and thus, the structure of the gear case and the like can be simplified.

In some embodiments, since the plate thickness of the eccentric disk and the plate thickness of the engagement portion of the cutter are approximately equal, the size of the gear case and the like can be reduced, and the engagement portion can be prevented from disengaging from the eccentric disk.

### Brief Description of Drawings

FIG. 1 is an overall external view of an embodiment of a hedge trimmer in accordance with the present invention;
FIG. 2 is a perspective view of a cutter/gear unit of the hedge trimmer illustrated in FIG. 1;
FIG. 3 is a plan view of the cutter/gear unit illustrated in FIG. 2;
FIG. 4 is a bottom view of the cutter/gear unit illustrated in FIG. 2;
FIG. 5 is an exploded perspective view of the cutter/gear unit illustrated in FIG. 2;
FIG. 6 is an enlarged exploded perspective view of a region around a gear of the cutter/gear unit illustrated in FIG. 5;
FIG. 7 is a view for illustration of the operation of cutters when a crank cam and frame-shaped engagement portions of the cutters in the cutter/gear unit illustrated in FIG. 2 mesh with each other;
FIG. 8 is a partially enlarged bottom view illustrating a state in which a bottom plate of the gear unit is removed from the bottom view of FIG. 4;
FIG. 9 is an enlarged cross-sectional view in the direction of the arrow U-U in Fig. 3;
FIG. 10 is an enlarged cross-sectional view in the direction of the arrow V-V in FIGS. 4 and 8; and
FIG. 11 is an enlarged cross-sectional view of another example of the hedge trimmer in accordance with the present invention in the direction of the arrow U-U in FIG. 3.

### Description of Embodiments

Hereinafter, an embodiment of the present invention will be described with reference to the drawings.

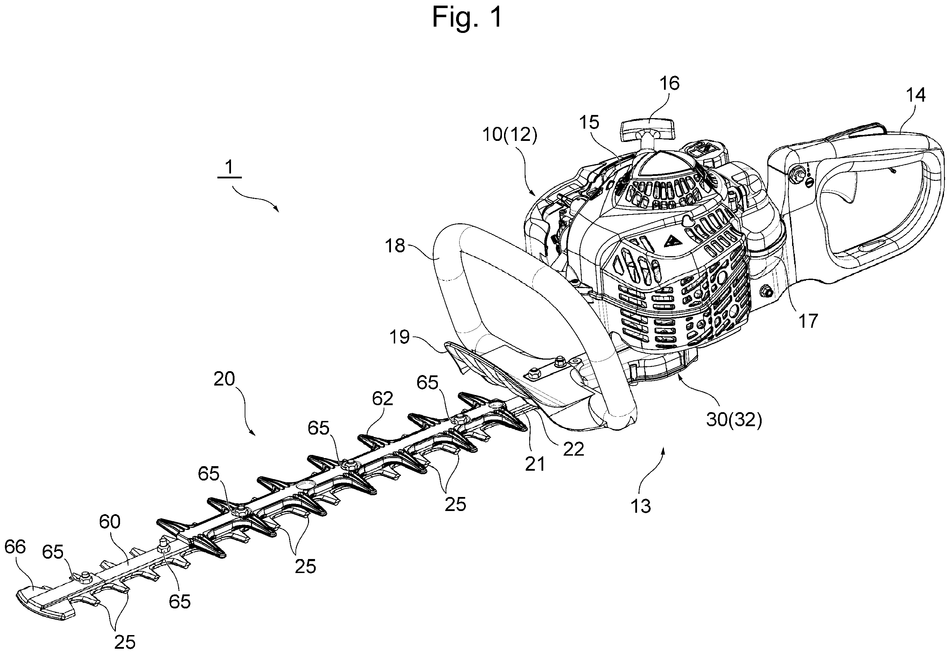

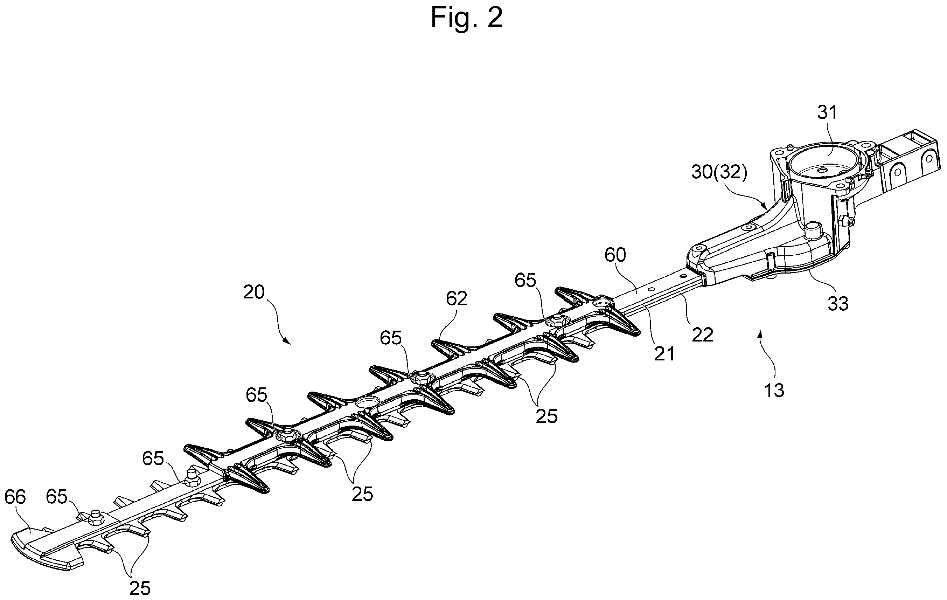

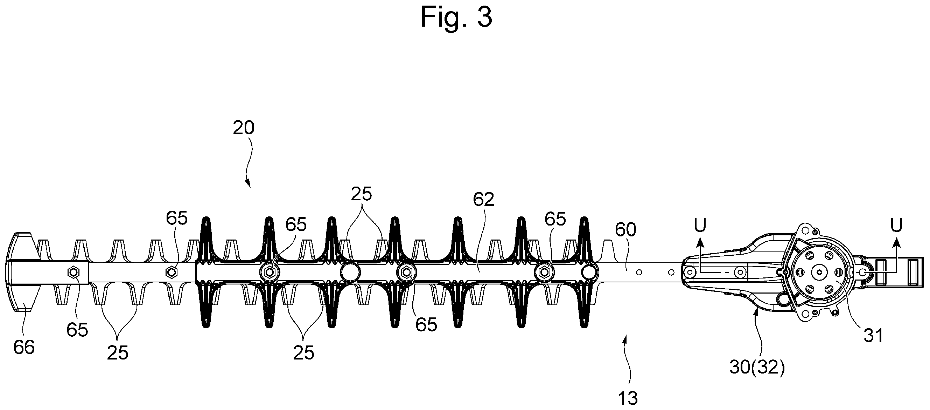

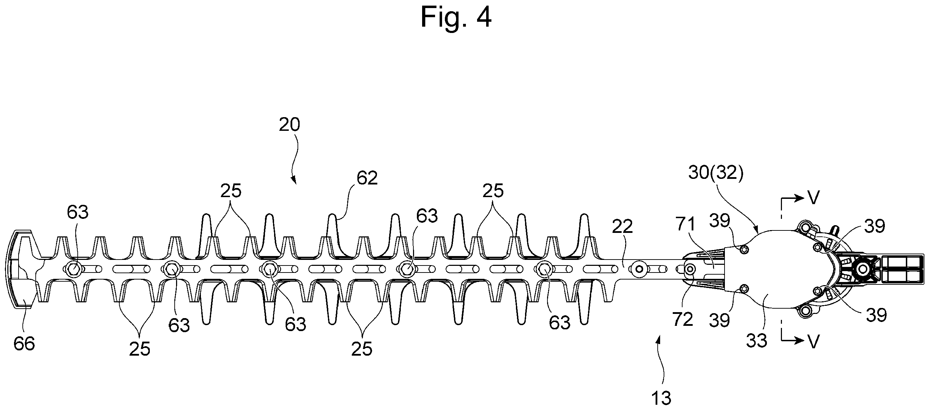

FIG. 1 is an overall external view of an embodiment of the hedge trimmer in accordance with the present invention. FIG. 2 is a perspective view of a cutter/gear unit of the hedge trimmer illustrated in FIG. 1. FIGS. 3, 4, and 5 are a plan view, a bottom view, and an exploded perspective view, respectively, of the cutter/gear unit illustrated in FIG. 2.

The hedge trimmer 1 of the embodiment illustrated in the drawings mainly includes, for example, a body 10, which includes a small air cooled 2-stroke gasoline engine 15 (hereinafter simply referred to as an "engine 15") having a recoil starter 16 as a drive source and a fuel tank 17, and a cutter/gear unit 13, which includes a cutter assembly 20 and a gear assembly 30, as illustrated in FIGS. 2 to 4.

The body 10 includes a body housing 12 for housing the engine 15. The rear side of the body housing 12 is provided with a rear handle 14 having an operating lever and the like, and the cutter assembly 20 has attached to its proximal end (i.e., on the side of the body housing 12) a front handle 18 with a front guard 19.

The cutter assembly 20 includes cutters 21 and 22 in upper and lower positions (hereinafter also referred to as an "upper cutter 21" and a "lower cutter 22"), a belt-like cutter support 60 that has approximately the same width as the cutters 21 and 22 and is long in the front-rear direction, an upper face guard 62, an end guard 66, and the like, and also includes bolts 63, washers 64, nuts 65, and the like for securely fastening them together (which will be described in detail later).

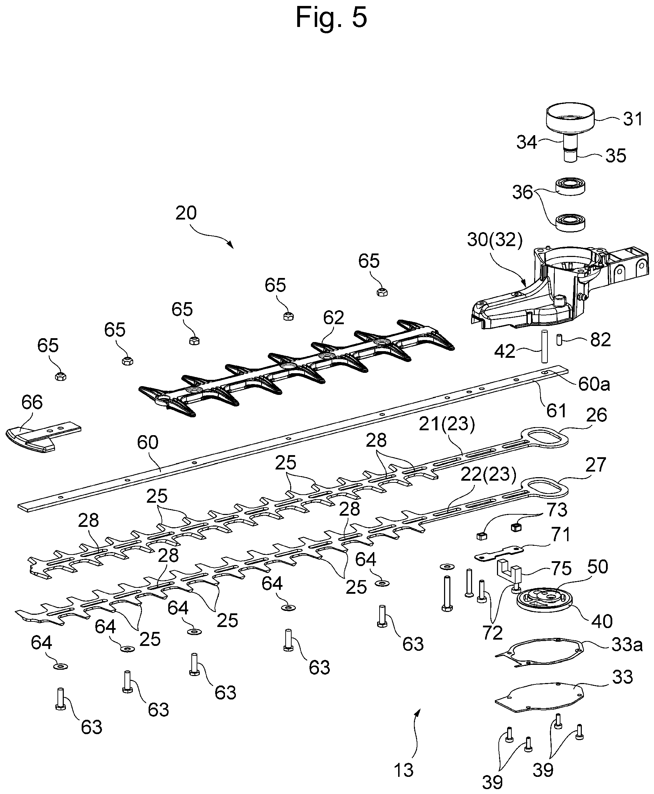

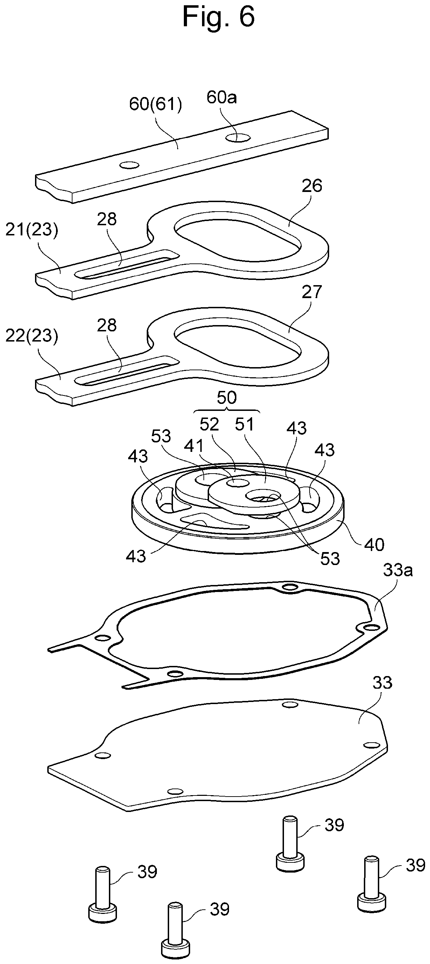

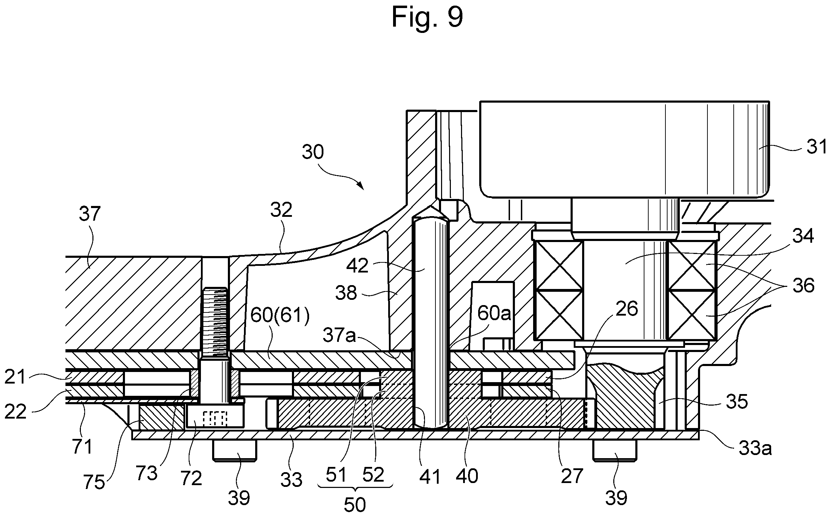

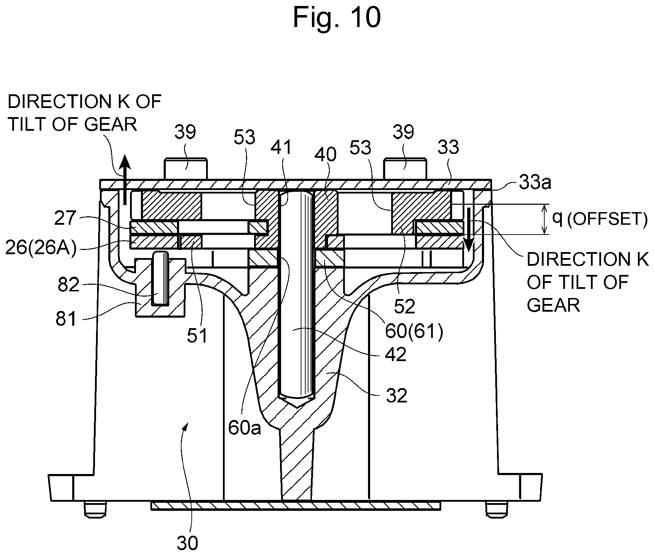

The gear assembly 30 includes, as is clear from FIGS. 9 and 10 in addition to FIGS. 5 and 6, a gear case 32 having a bottom plate 33 and attached to the bottom of the body housing 12. Combined bearings 36 for supporting a rotating drive shaft 34 are disposed in the rear portion of the gear case 32. A thick-wall portion 37 including a shaft boss 38 with a bottom end face 37a at a predetermined height from the bottom plate 33 is provided in the front portion of the gear case 32.

The bottom plate 33 is securely fastened to the gear case 32 using four bolts 39 with a seal ring 33a, which has approximately the same shape as the outer shape of the bottom plate 33, interposed therebetween.

The upper end of the rotating drive shaft 34 has integrally fixed thereto a clutch case 31 for a centrifugal clutch provided on the output side of the engine 15, and the bottom of the rotating drive shaft 34 has formed thereon a pinion (i.e., a gear) 35 for transmitting the output (i.e., torque) of the engine 15 to the cutter drive gear 40.

In addition, the upper portion of the support shaft 42 is fixed in a press-fit manner into the shaft boss 38 of the gear case 32, and the lower portion of the support shaft 42 protrudes from the shaft boss 38 to a region around the bottom plate 33 so that the lower end of the support shaft 42 is rotatably fit-inserted into a shaft hole 41 of the cutter drive gear 40 that meshes with the pinion 35.

The upper face side of the gear 40 is integrally provided with a crank cam 50 including eccentric disks 51 and 52 in upper and lower positions (hereinafter also referred to as an "upper eccentric disk 51" and a "lower eccentric disk 52") that are eccentrically arranged on one side and the other side (that is, in mutually opposite directions) with respect to the rotating axis of the gear 40 (i.e., the center line of the support shaft 42). In this example, the upper and lower eccentric disks 51 and 52 are integrally formed with the crank cam 50 through shaving. The gear 40 has formed therein four lightening holes 43 that are bilaterally symmetrical, and the eccentric disks 51 and 52 and the gear 40 each have formed therein a lightening hole 53 that is circular in shape as seen in plan view (see, in particular, FIG. 6).

The cutter assembly 20 has a pair of the upper and lower cutters 21 and 22 slidably facing and contacting each other (relative to each other). The pair of the upper and lower cutters 21 and 22 each have a thin, long substrate portion 23 protruding forward (in a direction opposite to the rotating drive shaft 34 and the pinion 35) from the inside of the gear case 32. Each thin, long substrate portion 23 has cutting edges 25 alternately provided on the right and left sides thereof in a protruding manner along the longitudinal direction thereof, with predetermined gaps therebetween, and a given number of elongated holes 28. The proximal ends of the respective thin, long substrate portions 23 are provided with frame-shaped engagement portions 26 and 27, each in an elliptical or race-track shape having a short axis along the longitudinal direction. The frame-shaped engagement portions 26 and 27 mesh with the upper and lower eccentric disks 51 and 52, respectively, of the crank cam 50 so that the upper and lower eccentric disks 51 and 52 are rotated while slidably contacting the respective inner peripheral surfaces of the frame-shaped engagement portions 26 and 27.

Herein, the plate thickness of each of the upper and lower eccentric disks 51 and 52 of the crank cam 50 and the plate thickness of each of the frame-shaped engagement portions 26 and 27 of the upper and lower cutters 21 and 22 are set approximately equal. The frame-shaped engagement portion 27 of the lower cutter 22 is placed on the gear 40, and the frame-shaped engagement portion 27 of the lower cutter 22 meshes with the lower eccentric disk 52 provided right above the gear 40 so that the lower eccentric disk 52 is rotated while slidably contacting the inner peripheral surface of the frame-shaped engagement portion 27. Meanwhile, the frame-shaped engagement portion 26 of the upper cutter 21 is placed on the lower frame-shaped engagement portion 27, and the frame-shaped engagement portion 26 of the upper cutter 21 meshes with the upper eccentric disk 51 provided on the lower eccentric disk 52 so that the upper eccentric disk 51 is rotated while slidably contacting the inner peripheral surface of the frame-shaped engagement portion 26.

It should be noted that on the lower faces of the cutters 21 and 22 at their proximal ends, a sliding sheet plate 71 is securely fastened to both the cutters 21 and 22 and the cutter support 60 using two bolts 72 each adapted to be screwed into the thick-wall portion 37 of the gear case 32 and having a square spacer 73 arranged therearound. In addition, a sliding guide member 75 in a U-shape as seen in side view is securely attached between the bottom plate 33 and the thick-wall portion 37 so as to contact the sliding sheet plate 71 from its bottom side (see, in particular, FIGS. 5 and 9).

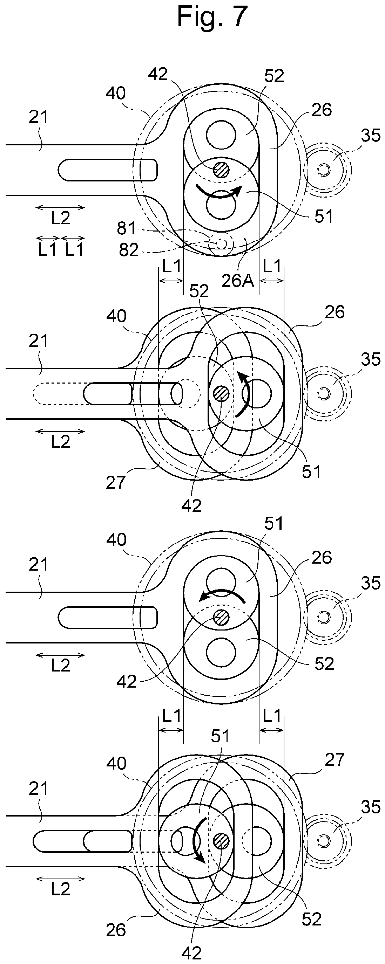

Therefore, when the gear 40 is rotationally driven in a counter-clockwise direction as seen from above via the clutch case 31, the rotating drive shaft 34, the pinion 35, and the like, for example, as illustrated in FIG. 7, the eccentric disks 51 and 52 of the crank cam 50 cause the upper and lower cutters 21 and 22 to linearly reciprocate in mutually (relatively) opposite directions along the longitudinal direction of the cutters by a stroke LI on each of the front and rear sides (i.e., a total stroke of L2). At this time, the cutting edges 25 of the upper and lower cutters 21 and 22 are ground against each other, thereby performing pruning or cropping, for example.

In this embodiment, the reference plane on the side of the cutters 21 and 22 and the reference plane on the side of the crank cam 50 in the thickness direction of the cutters 21 and 22, for allowing the frame-shaped engagement portions 26 and 27 of the upper and lower cutters 21 and 22 to mesh with the upper and lower eccentric disks 51 and 52, respectively, are set at approximately the same height as seen in side view.

Specifically, the cutter support 60 of the cutter assembly 20 is adapted to guide and support the upper and lower cutters 21 and 22 while allowing reciprocation thereof, and is securely fastened to the upper cutter 21 with bolts 63 and the like while slidably facing and contacting the upper cutter 21. It should be noted that the lower face of the cutter support 60 that faces and contacts the cutter 21 may be subjected to surface treatment, such as anticorrosion treatment, so that the cutter 21 can slide smoothly.

The cutter support 60 typically has, in the conventional techniques as seen in Patent Literature 1, one end (i.e., a proximal end) not reaching the frame-shaped engagement portions 26 and 27 of the cutters 21 and 22 and has a length of up to around one end of the thin, long substrate portion 23 of the upper cutter 21. In contract, in the hedge trimmer 1 of this embodiment, the cutter support 60 extends in the horizontal direction so that its proximal end side is placed on the crank cam 50 and on the frame-shaped engagement portions 26 and 27 of the cutters 21 and 22, and an extending portion 61 of the cutter support 60 forms both the reference plane on the side of the cutters 21 and 22 and the reference plane on the side of the crank cam 50 in the thickness direction of the cutters 21 and 22 (see, in particular, FIGS. 9 and 10).

That is, in this embodiment, each of the reference plane on the side of the cutters 21 and 22 and the reference plane on the side of the crank cam 50 in the thickness direction of cutters 21 and 22, for allowing the frame-shaped engagement portions 26 and 27 of the upper and lower cutters 21 and 22 to mesh with the upper and lower eccentric disks 51 and 52, respectively, is a plane (i.e., the bottom end face 37a of the thick-wall portion 37) in which the extending portion 61 of the cutter support 60 abuts the thick-wall portion 37 of the gear case 32, and there is no step between them.

The extending portion 61 of the cutter support 60 has formed therein an insertion through-hole 60a for passing the support shaft 42, and the extending portion 61 of the cutter support 60 is also used to receive thrusts of the gear 40 and the crank cam 50.

As described above, in this embodiment, since there is no step generated between the reference plane on the side of the cutters 21 and 22 and the reference plane on the side of the crank cam 50, dimensional management becomes easy, the number of components can be reduced, and the assembly property and the like can be improved, and thus, the structure of the gear case 32 and the like can be simplified.

Specifically, since the cutter support 60 is provided with the extending portion 61 so as to have no step generated between the reference plane on the side of the cutters 21 and 22 and the reference plane on the side of the crank cam 50, and the extending portion 61 of the cutter support 60 is also used to receive thrusts of the gear 40 and the crank cam 50, it is possible to allow the frame-shaped engagement portions 26 and 27 of the upper and lower cutters 21 and 22 to appropriately mesh with the upper and lower eccentric disks 51 and 52, respectively, of the crank cam 50, simplify the structure of the gear case 32 and the like, reduce the number of components, and improve the assembly property and the like. Thus, dimensional management becomes easy and the component cost, the processing and assembly cost, and the like can be suppressed.

By the way, in the hedge trimmer 1 with the aforementioned configuration, if the cutters 21 and 22 bite foreign matter, such as wide branches or wires, and thus are locked during a pruning operation, there is a possibility that the gear 40 may tilt and the frame-shaped engagement portions 26 and 27 of the cutters 21 and 22 may disengage from the eccentric disks 51 and 52, respectively, of the crank cam 50 due to the crank cam 50 having been offset from the gear 40 by q (see FIG. 10 and the like) in the thickness direction of the cutters 21 and 22.

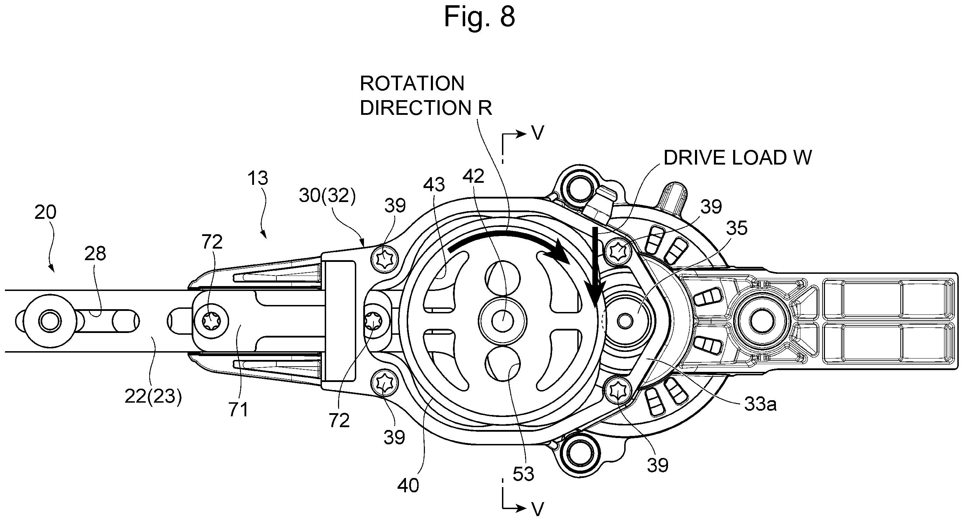

Specifically, in the hedge trimmer 1 of this embodiment, as illustrated in the bottom view of FIG. 8 and FIG. 10 (i.e., an enlarged cross-sectional view along the direction of the arrow V-V in FIG. 8), the gear 40 and the crank cam 50 are rotationally driven in a clockwise direction (i.e., in the direction of R) as seen from the bottom side so that a drive load W acts in one direction on the gear 40 at a portion where the gear 40 meshes with the pinion 35 (i.e., a meshing portion on the rear of the proximal end side of the cutters 21 and 22). In this case, the crank cam 50 is offset from the gear 40 as indicated by q in FIG. 10, and the cutter support 60 (or the extending portion 61 thereof) faces and contacts only the central portions of the gear 40 (and the crank cam 50) and the frame-shaped engagement portions 26 and 27. Therefore, when the cutters 21 and 22 are locked as described above, the gear 40 attempts to rotate while tilting in the direction of the arrow K in FIG. 10, while the frame-shaped engagement portions 26 and 27 attempt to tilt in a direction opposite thereto.

Therefore, as the eccentric disks 51 and 52 of the crank cam 50 attempt to rotate while tilting, there is a possibility that one end 26A of the frame-shaped engagement portion 26 may escape to the upper side (i.e., to the lower side in FIG. 10), with the result that the frame-shaped engagement portion 26 may disengage from the eccentric disk 51.

Therefore, in this embodiment, the following measure is taken to prevent the frame-shaped engagement portions 26 and 27 of the cutters 21 and 22 from disengaging from the eccentric disks 51 and 52, respectively, of the crank cam 50.

That is, a pressing boss 81 is provided right above the one end 26A of the frame-shaped engagement portion 26 in the gear case 32 (i.e., in the center of the semi-arc portion on the left end side of the frame-shaped engagement portion 26 as seen in plan view, as indicated by the imaginary line in the upper view of FIG. 7), and a pressing pin (i.e., a pressing member) 82 is press-fitted into the boss 81 so that the lower end of the pressing pin (i.e., the pressing member) 82 is arranged in proximity to the frame-shaped engagement portion 26. It should be noted that a bolt and the like may also be used instead of the pressing pin 82. In addition, although the pressing pin (i.e., the pressing member) 82 is arranged only at one position on the left end side of the frame-shaped engagement portion 26 as seen in plan view herein, the pressing pin (i.e., the pressing member) 82 may also be arranged at a plurality of positions on the left end side of the frame-shaped engagement portion 26 as seen in plan view, or at a plurality of positions on the right and left sides of the frame-shaped engagement portion 26 as seen in plan view.

According to such a configuration, the gear 40 can be prevented from tilting; otherwise, the frame-shaped engagement portions 26 and 27 of the cutters 21 and 22 would disengage from the eccentric disks 51 and 52, respectively, of the crank cam 50. This can eliminate the burden of resetting the cutters 21 and 22 during the operation, thus improving the operation efficiency, reliability, and convenience.

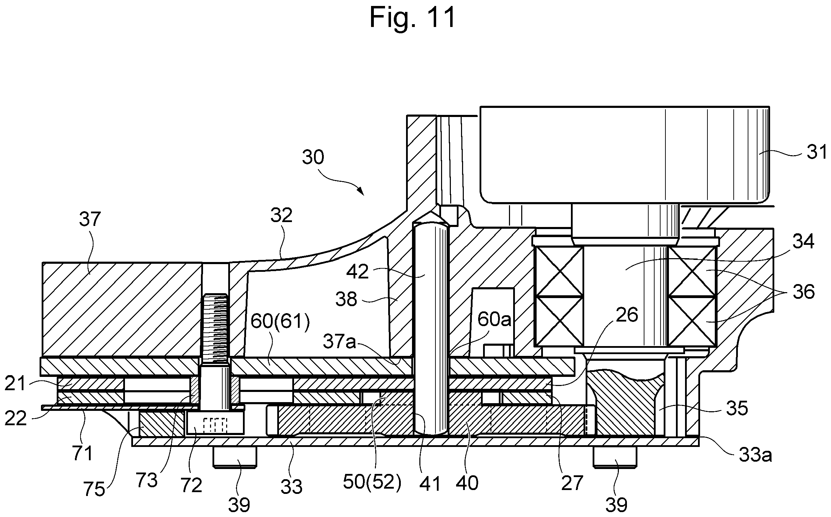

Although the aforementioned embodiment illustrates an example of the hedge trimmer 1 that includes a pair of the upper cutter 21 and the lower cutter 22 slidably facing and contacting relatively and that performs pruning or cropping, for example, by causing the upper and lower eccentric disks 51 and 52 of the crank cam 50 to reciprocate the upper cutter 21 and the lower cutter 22 in relatively opposite directions along the longitudinal direction thereof (that is, the hedge trimmer 1 of a type where both the upper and lower cutters 21 and 22 operate), the present invention is also applicable to a hedge trimmer 1 of a type where one of the upper and lower cutters 21 and 22 does not operate. That is, as illustrated in FIG. 11, for example, the upper cutter 21 and the cutter support 60 may be integrally formed (e.g., securely fastened together with bolts, fixed together using an adhesive, or integrally molded) so that the upper cutter 21 is immovably fixed with respect to the reference plane on the side of the lower cutter 22 that operates or the reference plane on side of the crank cam 50 that operates.

According to such a configuration, even in the hedge trimmer 1 of a type where one of the upper and lower cutters 21 and 22 does not move, no step is generated between the reference plane on the side of the cutters 21 and 22 and the reference plane on the side of the crank cam 50. Therefore, dimensional management becomes easy, the number of components can be reduced, and the assembly property and the like can be improved, and thus, the structure of the gear case 32 and the like can be simplified.

In addition, in this embodiment, since the plate thickness of each of the eccentric disks 51 and 52 and the plate thickness of each of the frame-shaped engagement portions 26 and 27 of the cutters 21 and 22 are set approximately equal, the size of the gear case 32 and the like can be reduced, and the frame-shaped engagement portions 26 and 27 can be prevented from disengaging from the eccentric disks 51 and 52, respectively.

Although an engine is used as the drive source in the aforementioned embodiment, the drive source may also be an electric motor or the like.

### Reference Signs List

- 1: Hedge trimmer
- 10: Body
- 12: Body housing
- 13: Cutter/gear unit
- 14: Rear handle
- 15: Engine (drive source)
- 16: Recoil starter
- 17: Fuel tank
- 18: Front handle
- 19: Front guard
- 20: Cutter assembly
- 21: Upper cutter (cutter)
- 22: Lower cutter (cutter)
- 23: Thin, long substrate portion
- 25: Cutting edge
- 26, 27: Frame-shaped engagement portions (engagement portions)
- 26A: One end of frame-shaped engagement portion
- 28: Elongated hole
- 30: Gear assembly
- 31: Clutch case
- 32: Gear case
- 33: Bottom plate
- 33a: Seal ring
- 34: Rotating drive shaft
- 35: Pinion (gear)
- 36: Combined bearings
- 37: Thick-wall portion
- 37a: Bottom end face of thick-wall portion
- 38: Shaft boss
- 39: Bolt
- 40: Cutter drive gear
- 41: Shaft hole
- 42: Support shaft
- 43: Lightening hole
- 50: Crank cam
- 51: Upper eccentric disk
- 52: Lower eccentric disk
- 53: Lightening hole
- 60: Cutter support
- 60a: Insertion through-hole
- 61: Extending portion
- 62: Upper face guard
- 63: Bolt
- 64: Washer
- 65: Nut
- 66: End guard
- 71: Sliding sheet plate
- 72: Bolt
- 73: Square spacer
- 75: Sliding guide member
- 81: Pressing boss
- 82: Pressing pin (pressing member)

## Claims

1. A hedge trimmer comprising:
a cutter drive gear rotationally driven by a drive source in a body housing;
a crank cam provided in the gear and including an eccentric disk; and
a pair of upper cutter and lower cutter slidably facing and contacting relatively,
wherein:
the crank cam causes the upper and lower cutters to reciprocate in relatively opposite directions along a longitudinal direction of the upper and lower cutters,
the crank cam including the eccentric disk and the upper and lower cutters are arranged in an upper face side of the gear,
the cutter has an engagement portion that meshes with the eccentric disk so that the eccentric disk is rotated while slidably contacting an inner peripheral surface of the engagement portion, and
a reference plane on the cutter side and a reference plane on the crank cam side are formed so that substantially no step is generated between an upper face of the cutter and an upper face of the eccentric disk.

2. The hedge trimmer according to claim 1, further comprising a belt-like cutter support that is operable relative to the cutter so as to support and guide the cutter while allowing relative reciprocation of the cutters,
wherein:
the cutter support has, on its proximal end side, an extending portion placed on the engagement portion of the cutter engaging the crank cam, and
the extending portion forms the reference plane on the cutter side and the reference plane on the crank cam side.

3. The hedge trimmer according to claim 1 or 2, wherein one of the upper and lower cutters is immovably fixed with respect to the reference planes.

4. The hedge trimmer according to any one of claims 2 and 3, wherein one of the upper and lower cutters and the cutter support are integrally formed.

5. The hedge trimmer according to any one of claims 1 to 4,
wherein:
the crank cam and the cutter drive gear are integrally formed, and
a plate thickness of the eccentric disk of the crank cam and a plate thickness of the engagement portion of the cutter are approximately equal.

6. The hedge trimmer according to any one of claims 1 to 5,
wherein:
each of the upper and lower cutters includes a thin, long substrate portion protruding to a front side of the body housing,
the substrate portion has cutting edges provided in a protruding manner along a longitudinal direction of the substrate portion, with predetermined gaps therebetween, and
a proximal end of the substrate portion is provided with the engagement portion that meshes with the eccentric disk the crank cam so that the eccentric disk is rotated while slidably contacting the inner peripheral surface of the engagement portion.

7. The hedge trimmer according to any one of claims 1 to 6, further comprising a pressing member that presses one of a right end side or a left end side of the engagement portion of the cutter against a gear case in which the gear is arranged, so as to prevent the cutter from disengaging from the crank cam due to the crank cam having been offset from the gear to an upper side in a thickness direction of the cutter.
